# EUROPEAN PATENT APPLICATION

(11) **EP 4 435 670 A1**
(43) Date of publication of application: **25.09.2024**
(21) Application number: 22386077.6
(22) Date of filing: 10.11.2022
(51) Int. Cl.: G06N 3/045, G06N 3/044, G06N 3/0464, G06N 3/084, G06N 3/09, G06N 3/0985, G06F 40/30

(54) **WEB CONTENT SENTIMENT ANALYSIS**

(71) Applicant: Tsantilas, Panagiotis, 200 02 Kokkoni, Korinthia (GR)
(72) Inventor: Tsantilas, Panagiotis, 200 02 Kokkoni, Korinthia (GR)
(74) Representative: Tsimikalis, Athanasios

(57) **Abstract**

A sentiment extraction system and methodology are presented for web data items from various online sources. Crawled data are pre-processed, in order to extract useful features that assist the machine learning algorithms in the sentiment analysis task. Words in each text are mapped to a neural embedding space and are provided to a hybrid, bi-directional long short-term memory network, coupled with convolutional layers and an attention mechanism that outputs the final textual features. Additionally, a number of document metadata are extracted, like emoji ideograms that further help detect sentiment in the data items by enhancing identification of patterns etc. Simplifications of the analysis problem by the reduction of the data size by selective downsampling and other techniques are also used.

## Description

### TECHNICAL FIELD

The present disclosure relates to sentiment extraction from Internet content.

### BACKGROUND

The task of sentiment analysis tries to predict the affective state of a document by examining its content and metadata through the application of machine learning techniques. Recent advances in the field consider sentiment to be a multi-dimensional quantity that pertains to different interpretations (or aspects), rather than a single one.

More specifically, sentiment analysis (SA) or opinion mining (OM)refers to the task of using a variety of natural language processing (NLP) techniques in order to extract specific characteristics out of a text excerpt that are related to the expressed opinion, sentiment and evaluation. The ultimate purpose of this procedure is to gain insight on the various aspects of the conveyed information. In recent years, it has become a vigorous research area, mainly due to the vast expansion of content shared online both by legal entities (e.g. companies/institutions) and individuals, like the users of online social network (OSN) platforms such as Twitter, Instagram and Facebook, or the authors of blogs. Indeed, people create and share all sorts of digital content, discuss, voice opinions and generally engage in activities, in a large, virtual public space.

As a consequence, various institutions and organizations, ranging from those which particularity study public opinion to those which are just interested in the perception of their products and services by greater audiences, have realized the potential of analyzing the aforementioned virtual public space. A proper, indepth analysis, will certainly be an important asset for the interested parties, as ideally, it will render specialized opinion polls and surveys irrelevant; one could rely on the abundant information available online instead.

Nevertheless, extracting user opinion from the various online sources is not a straightforward task, due to a number of reasons. The first pertains to the huge volume of the available data, dictating the use of large hardware and specific software resources, that are not easily accessible to, or affordable for everyone. Additionally, each service exhibits its own peculiarities and characteristics, as made available via application programming interfaces (APIs), whose free-of-charge tier is either very limited or nonexistent at all. Consequently, advanced programming skills are also required, apart from the cost of accessing the APIs at the required levels.

However, the main difficulty lies in the sentiment annotation task itself; that is, on the procedure of deciding and assigning particular sentiment values to the available content. Both of the aforementioned sub-tasks are cumbersome; specifying and adhering to a consistent set of annotation rules is not an easy. Furthermore, it is also very difficult to detect a sentiment in a text item since an indication of the author's sentiment is often covered under other information, which may have ambiguous meaning, or it refers to other data items.

It is, therefore, needed a sentiment extraction system and methodology that can accurately extract sentiment from on-line data items collected by a web crawler or other means.

### SUMMARY

The current exemplary implementations deal with the task of sentiment extraction in the framework of an architecture that collects documents from various online sources. Subsequently, the collected data are pre-processed, in order to extract useful features that assist the machine learning algorithms in the sentiment analysis task. More specifically, the words that comprise each text are mapped to a neural embedding space and are provided to a hybrid, bi-directional long short-term memory network, coupled with convolutional layers and an attention mechanism that outputs the final textual features.

Additionally, the frequency and type of emoji ideograms, either extracted automatically or assigned manually, in the form of hashtags etc. is evaluated. The novelty of the proposed approach lies in the semantic annotation of the preprocessed data items, the enrichment of their semantic context by identifying patterns etc. and the simplification of the analysis problem by the reduction of the data size by selective downsampling and other techniques. Specific implementation details are given, which present the best-known performance, while alternative exemplary implementations may use different setups in the layers of the neural network and their size, the window sizes, thresholds etc. all falling within the scope of protection of the present innovative solution.

### BRIEF DESCRIPTION OF THE DRAWINGS

**FIG.1** shows a system architecture for a web content sentiment extraction system.
**FIG.2** shows a methodology for web content sentiment extraction.

### DETAILED DESCRIPTION

The word "exemplary" is used herein to mean "serving as an example, instance, or illustration". Any example described herein as "exemplary" is not necessarily to be construed as preferred or advantageous over other embodiments.

The acronym "ASIC" is intended to mean "Application Specific Integrated Circuit".

The acronym "DB" is intended to mean "Database".

The acronym "CNN" is intended to mean "Convolutional Neural Networks".

The acronym "CPU" is intended to mean "Central Processing Unit".

The acronym "OS" is intended to mean "Operating System".

The acronym "RNN" is intended to mean "Recurrent Neural Networks".

The acronym "XML" is intended to mean "eXternsible Markup Language".

The acronym "URL" is intended to mean "Universal Resource Locator".

The acronym "USB" is intended to mean "Universal Serial Bus".

As used herein and in the appended claims, the singular forms "a," "and," and "the" include plural referents unless the context clearly dictates otherwise.

Unless defined otherwise, all technical and scientific terms used herein have the same meaning as commonly understood by one of ordinary skill in the art to which this invention belongs (web crawlers, Internet, computers, data processing). Although any techniques similar or equivalent to those described herein can be used in the practice or testing of the invention, the preferred techniques are described.

The terms "web" and "Internet" are used interchangeably to refer to any type of online content, including but not limited to news, commercial publications, social media public data, blogs, etc.

### Sentiment Extraction System Architecture

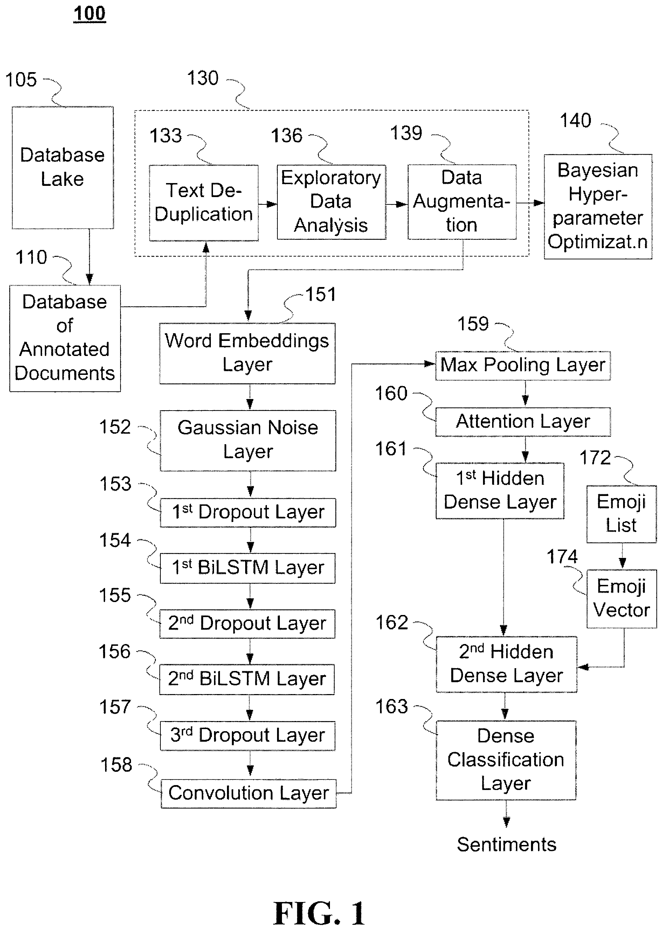

**FIG.1** shows a system architecture for a web content sentiment extraction system. Web content sentiment extraction system (100) uses web crawled data stored in one or more databases and a series of processing steps and Neural Network (NN) layers that have been trained with data similar to those in the said databases for extracting sentiments associated with the crawled data. The aim is to identify the sentiment (e.g. negative, neutral, positive) about any specific data item (e.g. an article, a commercial publication, etc.) that is expressed by any individual reading or interacting with the data item and/or the sentiment of the author of the original data item.

In one aspect, system (100) has its own data lake database (105), which is populated with data items (i.e. content) that has been collected by an external mechanism, e.g. a web crawler which is designed to crawl specific web addresses (i.e. web data sources) or specific types of web addresses. For example, the crawler may be programmed to crawl on-line newspapers, blogs and sites of car manufacturers for collecting data content related to cars.

In another aspect, system (100) accesses one or more data lake databases (105), or in yet another aspect, system (100) accesses both its own and one or more external data lake databases 105.

Typically, the one or more data lake databases (105) are created by one or more web crawlers that collect data items belonging to many categories and which are suitable for use for several different purposes. For example, a data lake database (105) may contain data items that may be used by automobile manufacturers, fashion retailers, fast-moving consumer goods manufacturers, etc. in order to support service provision to different clients.

Out of this extensive pool of data items stored in data lake databases 105, system (100) selects a subset of these data items and stores them in one or more annotated databases (110), which may be part of system (100), or may be external to system (100) and which the system (100) simply accesses. In one aspect databases (100), (105) are stored over one or more cloud infrastructures, remote or local servers, or a combination thereof.

Taking for instance a car manufacturer who is interested in finding out public sentiment about its cars, annotated database (110) will be populated with data items associated only with cars and in another aspect only with car of this specific manufacturer. The annotation of the data items of annotated database (110) may be done manually (e.g. by human annotators), automatically by commercial annotators, or more frequently by a combination of the two. Usually, artificial intelligence and machine learning approaches, such as NNs, are first trained by a human annotator and then left to perform the bulk volume of the data annotations.

The data items in annotated database (110) come from different sources and may not be suitable for analysis by system (100). For this reason, (100) has a data processing pipeline (130), which processes the annotated date of annotated database (110) for homogenizing it and for increasing its suitability for sentiment analysis. Data processing pipeline (130) first uses a de-duplicator module (133) which analyzes the data content for identifying copies of the same content (e.g. publications of the same content in more than one sources - this may refer to the same news article, reposts, retweets, etc.). If duplicate copies of the same data items are found, de-duplicator module (133) retains only one of the identical versions (e.g. the first or the last occurrence) and rejects the rest from annotated database (110). In one aspect, de-duplicator module (133) associates metadata related to some or all of the source, date, author, publisher, etc. of the duplicate copies and stores these metadata in annotated database (110).

De-duplicated data items are then fed to an explanatory data analysis module (136), which receives input text and classes of document (created during an annotation step) from annotated database (110) and uses them for Statistical Analysis. Any type of known statistical analysis technique may be used by explanatory data analysis module (136) for outputting an analyzed data on classes distribution and top N-grams, along with data split 80%, 10%, 10% on training, validation and test sets.

The analyzed data from explanatory data analysis module (136) is then fed to a data augmentation module (139), which if the statistical analysis shows (large) data imbalance (i.e. bias towards a certain data class etc.) then finds the top N-grams on the training set, and checks if the same N-grams of the minority class coexist in the majority class, and then takes data from the majority class and annotates them as the minority class. Data augmentation module (139) outputs augmented training data, while the validation and test data are not augmented. The augmented and non-augmented data are then outputted by data processing pipeline (130) for use by a Bayesian hyperparameter optimization module (140) and by a NN's word embeddings layer (151). The NN is designed to enhance the information of the data items for extracting sentiment. To achieve this from a set of data items it selects and processes a selective subset of the data items in the set.

Bayesian hyperparameter optimization module (140) is a machine learning module that is designed to find the global minimum for every hyper-parameter of a cost function f(x) used by an Adam Optimizer, in the smallest number of steps. Hyperparameters initially exists in default range and are selected from a hyperparameter set that contains dropout words, dropout RNN, dropout dense, dropout attention, I2_regularization, loss_I2, and learning rate. Other known hyperparameter may also be used for driving the optimizer.

The NN used has the following layers, connected in the below order: word embeddings layer (151), Gaussian noise layer (152), 1^{st} dropout layer (153), 1^{st} Bidirectional long short-term memory (BiLSTM) layer (154), 2^{nd} dropout layer (155), 2^{nd} BiLSTM layer (156), 3^{rd} dropout layer (157), convolutional layer (158), max pooling layer (159), attention layer (160), 1^{st} hidden dense layer (161), second hidden dense layer (162), and dense classification layer (163).

Word embeddings layer (151) is the first layer of the NN. It takes as input the processed training, validation and test data that are outputted by data processing pipeline (130) and a set of word embeddings, and which are preprocessed text items that are split by sub-tokens and encoded into real numbers using the well-known cosine similarity formula. The numbers show the similarity among a group of words. The output of word embeddings layer (151) are word vectors of fixed length that contain numbers, i.e. the embedding vectors. These word vectors form an embeddings space.

The word vectors are then fed to Gaussian noise layer (152), which adds small Gaussian Noise (µ=0,σ=1) to the word (embedding) vectors for avoiding overfitting, and outputs the noisy data items to the 1^{st} dropout layer (153).

1^{st} dropout layer (153) receives the noisy data from Gaussian noise layer (152) and the processed training, validation and test data that are outputted by data processing pipeline (130) and randomly sets input data items to 0 with a frequency set by the Bayesian hyperparameter Optimization module (140) on each step of the optimization during training time, which helps prevent overfitting. As a result, 1^{st} dropout layer (153) takes as input noisy data and outputs a smaller percentage of these noisy data.

The output of 1^{st} dropout layer (153) together with the output of Bayesian hyperparameter optimization module (140) are fed as inputs to 1^{st} BiLSTM layer (154), which is a sequence processing layer that consists of two LSTMs, one taking the input in a forward direction, and the other in a backward direction taking into account the structure, as well as the text's context. Moreover, its hyperparameters, "dropout_rnn" and "I2_reg" variables, are adjusted and optimized by the Bayesian hyperparameters optimization module (140). 1^{st} BiLSTM layer (154) unexpectedly performs better on lengthly texts (i.e. texts with a length of 200-600 characters) and outputs the concatenated features of the BiLSTM's last hidden state for all the tokens (i.e. words and symbols) at its input as real numbers.

The output of 1^{st} BiLSTM layer (154) together with the output of Bayesian hyperparameter optimization module (140) are fed as inputs to 2^{nd} dropout layer (155), which randomly sets a percentage of input items to 0, which helps prevent overfitting. 2^{nd} dropout layer (155) input consists of noisy 1D tensors of data and its outputs consists of a smaller percentage of the 1D tensors of data. The percentage of dropout is set by an optimal value found by the Bayesian Optimization during training time.

The output of 2^{nd} dropout layer (155) is fed to 2^{nd} BiLSTM layer (156) together with the output of Bayesian hyperparameter optimization module (140), which operates identically to 1^{st} BiLSTM layer (154) and outputs the concatenated features of the BiLSTM's last hidden state for all the tokens in its input as real numbers.

The output 2^{nd} BiLSTM layer (156) together with the output of Bayesian hyperparameter optimization module (140) are fed to 3^{rd} dropout layer (157), which operates identically to 1^{st} dropout layer (153) and 2^{nd} dropout layer (155) and outputs a smaller percentage of the 1D tensors of its input data.

The output of 3^{rd} dropout layer (157) is fed to a convolutional layer (158), which takes the input of 1D tensors and convolutes them by a filter of length 64 and by 1D Convolutional window of 5 (kernel_size) to find numerical patterns on the linguistic groups per kernel_size, and outputs a linear 1D tensor of real numbers.

Max pooling layer (159) receives the output of 3^{rd} dropout layer (157) and downsamples it by a pooling window of length 5. This downsampling allows max pooling layer (159) to select the most important information in its input and output real numbers in 1D Tensors.

The output of max pooling layer (159) together with the output of Bayesian hyperparameter optimization module (140) are fed to attention layer (160), which balances the drop of information from the filtering of max pooling layer (159) by finding words carrying strong sentiment. Attention layer (160) outputs an attention vector from 128 nodes using the tanh activation function on values, which is a reduction over the values of the 1D tensors where each value is the result of tanh activation function on attention weights. The attention weights are calculated as part of the dot product of the softmax function of scores with the source hidden state.

The output of attention layer (160) together with the output of Bayesian hyperparameter optimization module (140) are fed to 1^{st} hidden dense layer (161), which consists of 1024 neurons and whose activation function is the rectified linear unit (ReLU). It finds more features from more complex data patterns and outputs the results of the activation function (ReLU) as 1D tensor.

The output of 1^{st} hidden dense layer (161) together with the output of Bayesian hyperparameter optimization module (140) and an emoji vector are fed to a 2^{nd} hidden dense layer (162), consisting of 128 neurons, whose activation function is the rectified linear unit (ReLU). It finds more features from more complex data patterns and outputs the results of the activation function (ReLU) as 1D tensor.

The emoji vector is created by an emoji vector module (174). Important information lies in emoji ideograms for Social Media texts. A frequency vector for each web document is constructed and exported by emoji vector module (174) to 2^{nd} hidden dense layer (162) as an emoji vector. The elements of the emoji vector represent the number of times each particular emoji appears in a data item (i.e. a text in the present context).

Emoji vector module (174) takes as input a list of emojis constructed by an emoji list module (172).

The output of 2^{nd} hidden dense layer (162) is fed to a dense classification layer (163), which calculates probabilities per class and outputs the probability of the activation function (sotfmax) per class category (i.e. negative, neutral, positive). The highest of these probabilities for each data item represents the sentiment associated with this data item.

The number of neurons, filter lengths and other parameters presented for system (100) are selected as providing optimal results. Variations of these parameters may also be used without departing from the scope of protection of the present innovative solution.

### Sentiment Extraction Methodology

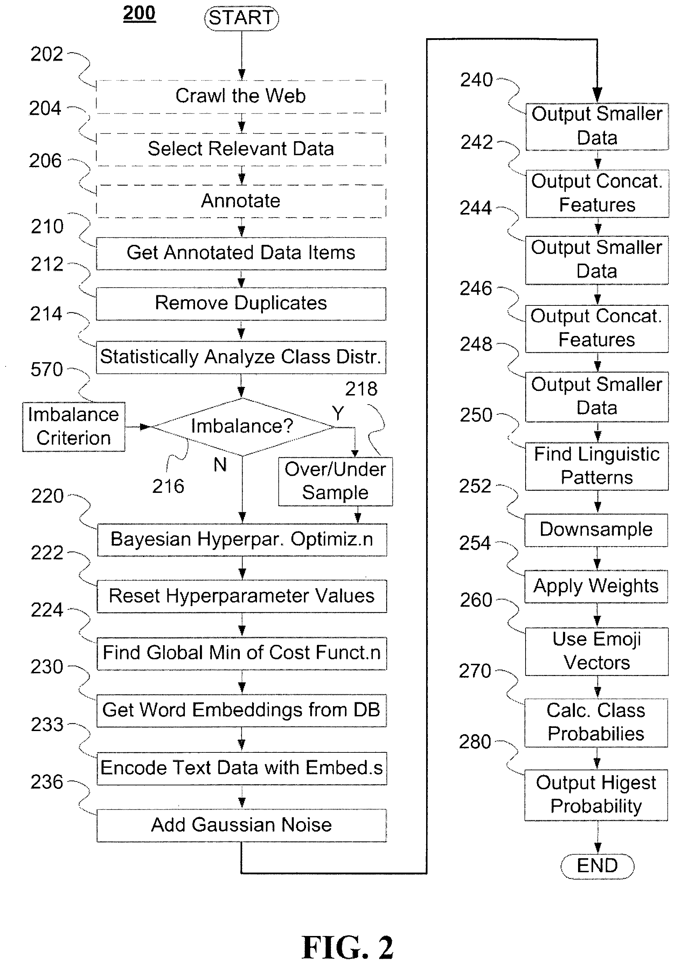

**FIG.2** shows a methodology for web content sentiment extraction. Methodology (200) has a step for getting annotated data items (210) from a database (110) storing web crawled data. The data items in database (110) have been created by crawling (202) specific sites of the web for publicly available data, selecting (204) the relevant data from the crawled data in a database (105) and annotating them (206) in database (110). The selection step (204) is set so as to select data relevant to the purposes of the sentiment extraction task, e.g. extracting the sentiment of data items relating to the cars of a certain car manufacturer.

The annotated data items are then processed with de-duplicator module (133) for removing duplicate data items (212) and their class distributions (as it may be derived by known methods from the annotations of the data items) and top N-grams are statistically analyzed (214). Using an imbalance criterion (217) (e.g. a threshold used to separate the data item distributions into sets; if membership in these sets is not approximately the same, e.g. with a 10% tolerance, then the imbalance exists), if an imbalance is detected (216), then data oversampling of the minority class is performed together with downsampling the majority class (218) using the data augmentation module (135).

Methodology (200) continues with data (i.e. hyperparameter) optimization (220) using Bayesian Hyperparameter optimization module (140), which includes resetting hyperparameter values (222) (which are selected from a hyperparameter set that contains dropout words, dropout recurrent neural network (RNN), dropout dense, dropout attention, I2_regularization, loss_I2, and learning rate), and finds the global minimum of a cost function used in an Adam optimizer for every hyperparameter (224).

Methodology gets word embeddings from an external or internal database (230) and feeds them to a NN. Word Embeddings are preprocessed text items split by sub-tokens and encoded to real numbers using the cosine similarity formula. The numbers show the similarity among a group of words. The NN uses word embeddings layer (151) to encode text items (i.e. text data) into numbers (233) using the word embeddings. These numbers are then passed to a Gaussian noise layer (152), which adds small Gaussian noise (µ=0,σ=1) (236) to the encoded data to avoid overfitting the data.

The noisy data are then processed by 1^{st} dropout layer (153), which randomly sets encoded data items to 0 with a frequency set by Bayesian Hyperparameter optimization module (140) on each step during training time (240), which helps prevent overfitting. As input takes the noisy data and outputs a smaller percentage of the data.

The reduced set of noisy data is then processed (242) by 1^{st} BiLSTM layer (154), which consists of two LSTMs, one taking the input in a forward direction, and the other in a backwards direction taking into account the structure, as well as the text's context. Moreover, 1^{st} BiLSTM layer's (154) hyperparameters "dropout_rnn" and "I2_reg" variables are adjusted and optimized by Bayesian Hyperparameter optimization module (140). 1^{st} BiLSTM layer (154) unexpectedly performs better on lengthy texts (i.e. 200-600 characters) and outputs the concatenated features of the LSTMS' and BiLSTM's last hidden state for all the tokens in the sequence as real numbers.

The output of step (242) is then processed by 2^{nd} dropout layer (155), which randomly sets encoded data items to 0 with a frequency set by Bayesian Hyperparameter optimization module (140) on each step during training time (244), which helps prevent overfitting. As input takes the noisy data and outputs a smaller percentage of the data.

The reduced data set of step (244) is then processed (246) by 2^{nd} BiLSTM layer (156), which consists of two LSTMs, one taking the input in a forward direction, and the other in a backwards direction taking into account the structure, as well as the text's context. Moreover, 2^{nd} BiLSTM layer's (156) hyperparameters "dropout_rnn" and "I2_reg" variables are adjusted and optimized by Bayesian Hyperparameter optimization module (140). 2^{nd} BiLSTM layer (156) performs better on lengthy texts (i.e. 200-600 characters) and outputs the concatenated features of the LSTMS' and BiLSTM's last hidden state for all the tokens in the sequence as real numbers.

The output of step (246) is then processed by 3^{rd} dropout layer (157), which randomly sets encoded data items to 0 with a frequency set by Bayesian Hyperparameter optimization module (140) on each step during training time (248), which helps prevent overfitting. As input takes the noisy data and outputs a smaller percentage of the data.

The reduced data set outputted by step (248), which is an 1D tensors, is convoluted (250) by convolutional layer (158) using a filter of length 64 and an 1D convolutional window of length 5 (kernel_size) to find numerical patterns on the linguistic groups per kernel_size.

The output of step (250), which is a set of vectors of linear 1D tensors of real numbers, is then downsampled (252) by max pooling layer (159) using a pooling window of length 5. Step (252), thus, implements a mechanism for getting (i.e. selecting) the most important vectors and outputs vectors of real numbers in 1D Tensors.

The downsampled data of step (252) are then processed by attention layer 160, which balances the drop of information from step (252) by applying weights (i.e. weighting) (254) to the 1D tensors it receives as input. These weights are derived from the tanh activation function on at attention weights The attention weights calculated as of the dot product of softmax function of scores with the source hidden state.

The weighted data of step (254) are then processed by 1^{st} hidden layer (161), which uses 1024 neurons to find more features from more complex data patterns and outputs the results of its activation function (ReLU) as 1D tensor (256).

The output of step (256) is then processed by 2^{nd} hidden layer (162), which uses 128 neurons to process its input data together with emoji vectors (174) (representing the frequency of occurrence of each emoji in a text item) that have been created from an emoji list (172), for to find more features from more complex data patterns and outputs the results of its activation function (ReLU) as 1D tensor (260). Step (260) is based on the fact that important information lies in emoji ideograms for the social media textual publications.

The output of step (260) is processed by dense classification layer (163), which calculates the probabilities per class (270) and outputs the probability of the activation function (sotfmax) per class category (negative, neutral, positive) (280). The class category with the highest probability for each data item is set as the sentiment of the data item, which may then be used by external systems and methodologies (e.g. for designing a marketing strategy for a new car model, or for adjusting the pricing of a car model, etc.).

In methodology (200), steps (230), (233), (240), (242), (244), (246), (248), (254), (256), (260) also get as input the output of Bayesian hyperparameter optimization step (220) (i.e. steps (222), (224)).

The processes presented above refer to news sites and articles, commercial sites and articles, social media sites and publications and retweets that are given as examples. It is noted that the scope of the present innovative sentiment detection system and method is not limited to the previous examples but applies to others and may include other data items than text, namely images, video, 3D audio, vlogs, etc. which after appropriate processing may be converted to text data or other type of audiovisual data that may be represented as feature vectors (i.e. numerically). Where non-textual content is used the proposed sentiment extraction methodology and system may use metadata accompanying the non-textual content, or in other exemplary embodiments apply additional processing steps where textual data is derived from the non-textual content. By means of example, voice speech and sound recognition may be used to create text versions of speech or text description of sound (e.g. song title, metadata describing an explosion, etc.), or image/video/3D analysis may be used to create metadata describing visual content. Techniques for audio-visual content processing are well known in prior art and are not included in the present disclosure as they are obvious to any reader of ordinary skill in related art.

Raw, processed and analyzed data are stored in queues and databases (such as SQL, noSQL or other) while in alternative exemplary embodiments are stored in log files, data structures, etc. Data are stored in ASCII, XML files, compressed, encrypted, or other representations and file formats.

The above exemplary embodiment descriptions are simplified and do not include hardware and software elements that are used in the embodiments, but are not part of the current innovative solution, are not needed for the understanding of the embodiments, and are obvious to any user of ordinary skill in related art. Furthermore, variations of the described technique, system architecture, and software architecture are possible, where, for instance, technique steps, and hardware and software elements may be rearranged, omitted, or newly added.

Various embodiments of the invention are described above in the Detailed Description. While these descriptions directly cover the above embodiments, it is understood that those skilled in the art may conceive modifications and/or variations (such as addition, deletion, or reordering of process steps, and software and hardware modules, variation of the number of and the size of NN layers, filters, etc.) to the specific embodiments shown and described herein. Any such modifications or variations that fall within the purview of this description are intended to be included therein as well. Unless specifically noted, it is the intention of the inventor that the words and phrases in the specification and claims be given the ordinary and accustomed meanings to those of ordinary skill in the applicable art(s).

The foregoing description of a preferred embodiment and best mode of the invention known to the applicant at this time of filing the application has been presented and is intended for the purposes of illustration and description. It is not intended to be exhaustive or limit the invention to the precise form disclosed and many modifications and variations are possible in the light of the above teachings. The embodiment was chosen and described in order to best explain the principles of the invention and its practical application and to enable others skilled in the art to best utilize the invention in various embodiments and with various modifications as are suited to the particular use contemplated. Therefore, it is intended that the invention not be limited to the particular embodiments disclosed for carrying out this invention, but that the invention will include all embodiments falling within the scope of the appended claims.

Those of skill in the art would understand that signals may be represented using any of a variety of different techniques. For example, data, software, instructions, signals that may be referenced throughout the above description may be represented by voltages, currents, electromagnetic waves, magnetic fields or particles, light or any combination thereof.

Those of skill would further appreciate that the various illustrative radio frequency or analog circuit blocks described in connection with the disclosure herein may be implemented in a variety of different circuit topologies, on one or more integrated circuits, separate from or in combination with logic circuits and systems while performing the same functions described in the present disclosure.

Those of skill would also further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g. a combination of a DSP and a microprocessor, a plurality of microprocessors, one or more microprocessors in conjunction with a DSP core, or any other such configuration.

In one or more exemplary embodiments, the functions described may be implemented in hardware, software, firmware, or any combination thereof. If implemented in software, the functions may be stored on or transmitted over as one or more instructions or code on a computer readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer or any other device or apparatus operating as a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

An exemplary storage medium is coupled to the processor such that the processor may read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed exemplary embodiments is provided to enable any person skilled in the art to make or use the present invention. Various modifications to these exemplary embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

## Claims

1. A system (100) for sentiment extraction from web content, the system comprising:
a data processing pipeline (130) configured for processing an annotated data item set;
a Bayesian hyperparameter optimization module (140) connected to the data processing pipeline (130) and configured for finding a global minimum for a plurality of hyper-parameters of a cost function;
a Neural Network (NN) connected to the Bayesian hyperparameter optimization module (140) and to the data processing pipeline (130) and configured for enhancing information of data items in the annotated data item set for extracting sentiment, using an output of the data processing pipeline (130) and of the Bayesian hyperparameter optimization module (140);
**characterized in that**:
the data processing pipeline (130) comprises (a) a de-duplicator module (133) configured for removing duplicate data items from the annotated data item set for producing a deduplicated data item set, (b) an explanatory data analysis module (136) configured for statistically analyzing the deduplicated data item set and splitting deduplicated data items in the deduplicated data item set into split data items in a training, a validation and a testing dataset, and (c) a data augmentation module (139) configured for, if the statistical analysis shows data imbalance towards a data class, finding top N-grams on a training set, and if N-grams of a minority class coexist in a majority class, taking data from the majority class and annotates them as the minority class to create augmented training data; and
the NN comprises (d) a word embeddings layer (151) configured for receiving a set of word embeddings, validation data, test data and the augmented training data from the data processing pipeline (130), and for creating word embedding vectors which contain numbers calculated by a cosine similarity formula applied thereof, (e) a Gaussian noise layer (152) connected to the word embeddings layer (151) and configured for adding Gaussian Noise (µ=0,σ=1) to the word embedding vectors and outputting noisy data items, (f) a 1^{st} dropout layer (153) connected to the Gaussian noise layer (152) and configured for randomly setting noisy data items to 0 with a frequency set by the Bayesian hyperparameter optimization module (140) during training time, (g) a 1^{st} BiLSTM layer (154) connected to the 1^{st} dropout layer (153) and configured for outputting first concatenated features of 1^{st} BiLSTM layer's (154) last hidden state for all data items at its input as real numbers, (h) a 2^{nd} dropout layer (155) connected to the 1^{st} BiLSTM layer (154) and configured for randomly setting data items to 0 with a frequency set by the Bayesian hyperparameter optimization module (140) during training time, (j) a 2^{nd} BiLSTM layer (156) connected to the 2^{nd} dropout layer (155) and configured for outputting second concatenated features of 2^{nd} BiLSTM layer's (156) last hidden state for all data items at its input as real numbers, (k) a 3^{rd} dropout layer (157) connected to the 2^{nd} BiLSTM layer (156) and configured for randomly setting data items to 0 with a frequency set by the Bayesian hyperparameter optimization module (140) during training time, (I) a convolutional layer (158) connected to the 3^{rd} dropout layer (157) and configured for convoluting an output of the 3^{rd} dropout layer (157) with a filter and by 1D Convolutional window of kernel_size for finding numerical patterns on the linguistic groups per kernel_size, (m) a max pooling layer (159) connected to the convolutional layer (158) and configured for downsampling an output of the convolutional layer (158), (n) an attention layer (160) connected to the max pooling layer (159) and configured for finding context for discovering when a sequence of tokens is relevant and calculating the result of a tanh activation function on attention weights, wherein the attention weights are calculated as a dot product of softmax function of scores with a source hidden state, (o) a 1^{st} hidden dense layer (161) connected to the attention layer (160) and configured for finding features from data patterns and words carrying sentiment, (p) a 2^{nd} hidden dense layer (162) connected to the 1^{st} hidden dense layer (161) and configured for receiving an emoji vector for finding features from data patterns combining on nodes a plurality of word meaning and emoji values in the emoji vector, and (q) a dense classification layer (163) connected to the 2^{nd} hidden dense layer (162) and configured for calculating probabilities per class of data items and for outputting a highest probability of another activation function per class of data item as a sentiment of a data item in the class of data item.

2. The system of claim 1, wherein the Bayesian hyperparameter optimization module (140) uses at least one of dropout words, dropout RNN, dropout dense, dropout attention, I2_regularization, loss_I2, and learning rate.

3. The system of any of the previous claims, wherein the filter of the convolutional layer (158) has a length of 64, and the kernel_size is 5.

4. The system of any of the previous claims, wherein the activation function of the dense classification layer (163) is sotfmax, and the classes of the data items are negative, neutral and positive.

5. The system of any of the previous claims, wherein the 1^{st} hidden dense layer (161) has 1024 neurons.

6. The system of any of the previous claims, wherein the 2^{nd} hidden dense layer (162) has 128 neurons.

7. The system of any of the previous claims, wherein the deduplicated data items are split 80%, 10%, 10% into the training, the validation and the testing dataset, respectively.

8. A method (200) for sentiment extraction from web content, the method comprising:
getting annotated data items (210) from a database (110) storing web crawled data; and
processing the annotated data items (210) with a system (100) of any of claims 1 to 7;
**characterized in that** the method (200) further comprises:
processing (212) the annotated data items with a de-duplicator module (133) for removing duplicate data items and for producing a deduplicated data item set;
statistically analyzing (214) the deduplicated data item set and splitting deduplicated data items in the deduplicated data item set into split data items in a training, a validation and a testing dataset, and if the statistical analysis shows data imbalance towards a data class, finding top N-grams on a training set, and if N-grams of a minority class coexist in a majority class, taking data from the majority class and annotates them as the minority class to create augmented training data;
receiving a set of word embeddings, validation data, test data and the augmented training data and creating word embedding vectors which contain numbers calculated by a cosine similarity formula applied thereof;
adding Gaussian Noise (µ=0,σ=1) to the word embedding vectors and outputting noisy data items;
randomly setting noisy data items to 0 with a frequency set by a Bayesian hyperparameter optimization module (140) during training time;
outputting first concatenated features of a 1^{st} BiLSTM layer's (154) last hidden state for all data items at its input as real numbers;
randomly setting data items to 0 with a frequency set by the Bayesian hyperparameter optimization module (140) during training time;
outputting second concatenated features of a 2^{nd} BiLSTM layer's (156) last hidden state for all data items at its input as real numbers;
randomly setting data items to 0 with a frequency set by a Bayesian hyperparameter optimization module (140) during training time for producing a processed data set;
convoluting the processed data set with a filter and by 1D Convolutional window of kernel_size for finding numerical patterns on the linguistic groups per kernel_size;
downsampling the numerical patterns;
finding context for discovering when a sequence of tokens is relevant and calculating the result of a tanh activation function on attention weights, wherein the attention weights are calculated as a dot product of softmax function of scores with a source hidden state;
finding features from data patterns and words carrying sentiment;
receiving an emoji vector for finding features from data patterns combining on nodes a plurality of word meaning and emoji values in the emoji vector; and
calculating probabilities per class of data items and for outputting a highest probability of another activation function per class of data item as a sentiment of a data item in the class of data item.

9. The method of claim 8, wherein the hyperparameter values are selected from a Bayesian hyperparameter set which contains dropout words, dropout RNN, dropout dense, dropout attention, I2_regularization, loss_I2, and learning rate.

10. The method of any of claims 8-9, wherein the filter in the convoluting step (250) has a length of 64, and the kernel_size is 5.

11. The method of any of claims 8-10, wherein the activation function of the dense classification layer (163) is sotfmax, and the classes of the data items are negative, neutral and positive.

12. The method of any of claims 8-11, wherein the downsampling step (252) comprises using a pooling window of length 5.

13. The method of any of claims 8-12, wherein the imbalance criterion is a threshold used for separating data item distributions into sets.

14. The method of any of claims 8-13, wherein the deduplicated data items are split 80%, 10%, 10% into the training, the validation and the testing dataset, respectively.

15. A non-transitory computer program product for sentiment extraction from web content, comprising instructions configured to cause a system according to any of claims 1-7 to implement a method according to any of claims 8-14.

## Amended claims

### Amended claims in accordance with Rule 137(2) EPC.

1. A system (100) for sentiment extraction from web content, the system comprising:
a data processing pipeline (130) configured for processing an annotated data item set;
a Neural Network (NN) connected to the Bayesian hyperparameter optimization module (140) and to the data processing pipeline (130) and configured for extracting sentiment, using an output of the data processing pipeline (130) and of the Bayesian hyperparameter optimization module (140);
wherein:
the data processing pipeline (130) comprises (a) a de-duplicator module (133) configured for removing duplicate data items from the annotated data item set by retaining only one of identical versions of copies of a same content published in more than one source_for producing a deduplicated data item set, (b) an explanatory data analysis module (136) configured for statistically analyzing the deduplicated data item set and splitting deduplicated data items in the deduplicated data item set into split data items in a training, a validation and a testing dataset and outputting N-grams, and (c) a data augmentation module (139) configured for, if the statistical analysis shows data imbalance towards a data class, and if N-grams of a minority class coexist in a majority class, taking data from the majority class and annotates them as the minority class to create augmented training data; and
the NN comprises (d) a word embeddings layer (151) configured for receiving a set of word embeddings, validation data, test data and the augmented training data from the data processing pipeline (130), and for creating word embedding vectors which contain numbers calculated by a cosine similarity formula applied thereof, (e) a Gaussian noise layer (152) connected to the word embeddings layer (151) and configured for adding Gaussian Noise (µ=0,σ=1) to the word embedding vectors and outputting noisy data items, (f) a 1^{st} dropout layer (153) connected to the Gaussian noise layer (152) and configured for randomly setting noisy data items to 0, (g) a 1^{st} BiLSTM layer (154) connected to the 1^{st} dropout layer (153) and configured for outputting first concatenated features of 1^{st} BiLSTM layer's (154) last hidden state for all data items at its input as real numbers, (h) a 2^{nd} dropout layer (155) connected to the 1^{st} BiLSTM layer (154) and configured for randomly setting data items to 0, (j) a 2^{nd} BiLSTM layer (156) connected to the 2^{nd} dropout layer (155) and configured for outputting second concatenated features of 2^{nd} BiLSTM layer's (156) last hidden state for all data items at its input as real numbers, (k) a convolutional layer (158) for finding numerical patterns on the linguistic groups per kernel_size, (l) a max pooling layer (159) connected to the convolutional layer (158) and configured for downsampling an output of the convolutional layer (158), (m) an attention layer (160) connected to the max pooling layer (159) and configured for finding context for discovering when a sequence of tokens is relevant, (n) a 1^{st} hidden dense layer (161) connected to the attention layer (160) and configured for finding features from data patterns and words carrying sentiment, (o) a 2^{nd} hidden dense layer (162) connected to the 1^{st} hidden dense layer (161) and configured for receiving an emoji vector for finding features from data patterns combining on nodes a plurality of word meaning and emoji values in the emoji vector, and (p) a dense classification layer (163) connected to the 2^{nd} hidden dense layer (162) and configured for calculating probabilities per class of data items and for outputting a highest probability of another activation function per class of data items as a sentiment of a data item in the class of data items;
**characterized in that**:
the system (100) further comprises a Bayesian hyperparameter optimization module (140) connected to the data processing pipeline (130) and configured for finding a global minimum for a plurality of hyper-parameters of a cost function;
in (f) the 1^{st} dropout layer (153) is configured for randomly setting noisy data items to 0 with a frequency set by the Bayesian hyperparameter optimization module (140) during training time;
in (h) the 2^{nd} dropout layer (155) is configured for randomly setting data items to 0 with a frequency set by the Bayesian hyperparameter optimization module (140) during training time;
a 3^{rd} dropout layer (157) is connected to the 2^{nd} BiLSTM layer (156) and configured for randomly setting data items to 0 with a frequency set by the Bayesian hyperparameter optimization module (140) during training time;
in (k) the convolutional layer (158) is connected to the 3^{rd} dropout layer (157) and configured for convoluting an output of the 3^{rd} dropout layer (157) with a filter and by 1D Convolutional window of kernel_size;
in (m) the attention layer (160) is further configured for calculating the result of a tanh activation function on attention weights, wherein the attention weights are calculated as a dot product of softmax function of scores with a source hidden state; and
the de-duplicator module (133) is configured for removing the duplicate data items from the annotated data item set by retaining only one of identical versions of copies of a same content published in more than one source for producing a deduplicated data item set,

2. The system of claim 1, wherein the filter of the convolutional layer (158) has a length of 64, and the kernel_size is 5.

3. The system of any of the previous claims, wherein the activation function of the dense classification layer (163) is sotfmax, and the classes of the data items are negative, neutral and positive.

4. The system of any of the previous claims, wherein the 1^{st} hidden dense layer (161) has 1024 neurons.

5. The system of any of the previous claims, wherein the 2^{nd} hidden dense layer (162) has 128 neurons.

6. The system of any of the previous claims, wherein the deduplicated data items are split 80%, 10%, 10% into the training, the validation and the testing dataset, respectively.

7. A method (200) for sentiment extraction from web content, the method comprising:
getting annotated data items (210) from a database (110) storing web crawled data; and
processing the annotated data items (210) with a system (100) of any of claims 1 to 6 for;
processing (212) the annotated data items with a de-duplicator module (133) for removing duplicate data items from the annotated data item set and for producing a deduplicated data item set;
statistically analyzing (214) the deduplicated data item set and splitting deduplicated data items in the deduplicated data item set into split data items in a training, a validation and a testing dataset, and if the statistical analysis shows data imbalance towards a data class;
receiving a set of word embeddings, validation data, test data and the augmented training data and creating word embedding vectors which contain numbers calculated by a cosine similarity formula applied thereof;
adding Gaussian Noise (µ=0,σ=1) to the word embedding vectors and outputting noisy data items;
randomly setting noisy data items to 0;
outputting first concatenated features of a 1^{st} BiLSTM layer's (154) last hidden state for all data items at its input as real numbers;
randomly setting data items to 0;
outputting second concatenated features of a 2^{nd} BiLSTM layer's (156) last hidden state for all data items at its input as real numbers;
randomly setting data items to 0 during training time for producing a processed data set;
convoluting the processed data set with a filter and by 1D Convolutional window of kernel_size for finding numerical patterns on the linguistic groups per kernel_size;
downsampling the numerical patterns;
finding context for discovering when a sequence of tokens is relevant;
finding features from data patterns and words carrying sentiment;
receiving an emoji vector for finding features from data patterns combining on nodes a plurality of word meaning and emoji values in the emoji vector; and
calculating probabilities per class of data items and for outputting a highest probability of another activation function per class of data item as a sentiment of a data item in the class of data item;
**characterized in that** the method (200) further comprises:
in the step of processing (212) the annotated data items with a de-duplicator module (133), retaining only one of identical versions of copies of a same content published in more than one source;
in the step of statistically analyzing (214) the deduplicated data item, if N-grams of a minority class coexist in a majority class, taking data from the majority class and annotates them as the minority class to create augmented training data;
the randomly setting noisy data items to 0 is done with a frequency set by a Bayesian hyperparameter optimization module (140) during training time; and
calculating, after the finding context step, the result of a tanh activation function on attention weights, wherein the attention weights are calculated as a dot product of softmax function of scores with a source hidden state after finding context for discovering when a sequence of tokens is relevant.

8. The method of claim 7, wherein the filter in the convoluting step (250) has a length of 64, and the kernel_size is 5.

9. The method of any of claims 7-8, wherein the activation function of the dense classification layer (163) is sotfmax, and the classes of the data items are negative, neutral and positive.

10. The method of any of claims 7-9, wherein the downsampling step (252) comprises using a pooling window of length 5.

11. The method of any of claims 7-10, wherein the imbalance criterion is a threshold used for separating data item distributions into sets.

12. The method of any of claims 7-11, wherein the deduplicated data items are split 80%, 10%, 10% into the training, the validation and the testing dataset, respectively.

13. A non-transitory computer program product for sentiment extraction from web content, comprising instructions configured to cause a system according to any of claims 1-6 to implement a method according to any of claims 7-12.
